# EUROPEAN PATENT APPLICATION

(11) **EP 3 043 249 A1**
(43) Date of publication of application: **13.07.2016**
(21) Application number: 14851997.8
(22) Date of filing: 09.10.2014
(51) Int. Cl.: G06F 3/048

(54) **APPLICATION ICON DISPLAY METHOD, SYSTEM AND TERMINAL**

(30) Priority: 09.10.2013 CN 201310468179
(71) Applicant: Huawei Technologies Co., Ltd., Longgang District Shenzhen, Guangdong 518129 (CN)
(72) Inventor: XU, Shun, Shenzhen Guangdong 518129 (CN); ZHU, Xiaofeng, Shenzhen Guangdong 518129 (CN)
(74) Representative: Körber, Martin Hans
(86) International application number: PCT/CN2014/088202
(87) International publication number: WO 2015/051746

(57) **Abstract**

The present invention is applicable to the field of technologies for displaying icons in a terminal, and provides a method and a system for displaying corresponding icons of application programs, and a terminal. The method for displaying corresponding icons of application programs includes: recording data that is generated in a process in which a terminal uses application programs stored in the terminal, to generate related usage data of the application programs; storing the generated related usage data; calculating, according to the related usage data, priorities of the application programs in the terminal; sorting the application programs according to the calculated priorities of the application programs; and displaying, according to a predetermined rule in a preset area on a desktop of the terminal, icons of a preset quantity of application programs ranking top. According to the present invention, an icon of a favorite application program of a user can be displayed on the desktop of the terminal, and the corresponding icons, on the desktop of the terminal, of the application programs can be automatically updated according to a usage record of the user.

## Description

This application claims priority to Chinese Patent Application No. CN 201310468179.9, filed with the Chinese Patent Office on October. 9, 2013, and entitled "METHOD AND SYSTEM FOR DISPLAYING ICONS OF APPLICATION PROGRAMS, AND TERMINAL", which is incorporated herein by reference in its entirety.

### TECHNICAL FIELD

The present invention relates to the field of display, and in particular, to a method and a system for displaying icons of application programs, and a terminal.

### BACKGROUND

In the prior art, for application programs frequently used in a terminal (such as a mobile terminal or a computer), a user needs to manually put icons of these application programs on a desktop, and create shortcut icons, so as to use these application programs conveniently and quickly. However, application programs that are frequently used by the user at different times may be different, and therefore, the user needs to manually change or add a shortcut icon on the desktop; and the user often forgets to create a shortcut icon, and therefore, when using a frequently used application program, the user needs to enter a main menu to search for an icon of the application program to be used, to use the application program, which not only is a waste of time, but also is inconvenient.

In addition, at the bottom of a desktop of a mobile terminal, there is an area that displays a row of shortcut icons, which is referred to as a dock bar (a DOCK bar), and is used for placing icons of most frequently used application programs. Icons on the DOCK bar do not change as a screen is slid. Most of the icons placed on the DOCK bar are preset when the mobile terminal is delivered from a factory, and are often icons of application programs such as a telephone application program, and a short message service message application program. During use, a user may perform a change operation, such as newly adding, removal, or replacement, on the icons, but if the user performs no operation on the icons, the icons here are not changed. Even if the icons here are not most frequently used, most users do not change the icons here, so that in this way, the DOCK bar does not implement a function of providing convenient and quick use of frequently used application programs for a user.

### SUMMARY

An objective of embodiments of the present invention is to provide a method and a system for displaying icons of application programs, and a terminal, so as to solve a problem that icons on a desktop of a terminal cannot be automatically replaced according to a usage habit of a user.

According to a first aspect, the present invention provides a method for displaying corresponding icons of application programs, where the method includes:
recording data that is generated in a process in which a terminal uses application programs in the terminal, to generate related usage data of the application programs;
storing the related usage data;
calculating, according to the related usage data, priorities of the application programs stored in the terminal;
sorting, according to the calculated priorities of the application programs stored in the terminal, the application programs stored in the terminal; and
displaying, according to a predetermined rule in a preset area on a desktop of the terminal, icons of a preset quantity of application programs ranking top.

In a first implementation manner of the first aspect, the desktop of the terminal includes a dock bar and/or an area of favorite icons, where the area of favorite icons is an area preset for displaying an icon of a particular application, and the preset area on the desktop is the dock bar or the area of favorite icons.

In the method for displaying corresponding icons of application programs provided in the first aspect or in the first implementation manner of the first aspect, the related usage data includes at least one of the following data: names, categories, usage duration, quantities of times, and/or usage time of the application programs.

Preferably, in any one of the foregoing methods for displaying corresponding icons of application programs, the calculating, according to the related usage data, priorities of the application programs in the terminal is specifically:
calculating a priority of each application program according to a preset single item of data in the related usage data; or
separately calculating a priority of each application programs according to the preset single item of data and a corresponding weighted value, where the weighted value is a weighted value preset for the single item of data, or a weighted value set for the single item of data according to another item of data.

Preferably, in any one of the foregoing methods for displaying corresponding icons of application programs, before the displaying, according to a predetermined rule in a preset area on a desktop of the terminal, a preset quantity of application programs ranking top, the method further includes at least one of the following steps:
receiving, by the terminal, a sorting operation request from a user; or
that a preset period expires; or
starting, by the terminal, an application program; or
exiting, by the terminal, an application program.

Preferably, in any one of the foregoing methods for displaying corresponding icons of application programs, the predetermined rule is to perform an arrangement according to the priorities of the application programs in a left-to-right order or a top-to-bottom order.

According to a second aspect, the present invention provides a system for displaying icons of application programs, where the system includes:
a recording module, configured to record data that is generated in a process in which a terminal uses application programs stored in the terminal, to generate related usage data of the application programs;
a storage module, configured to store the related usage data;
a calculation module, configured to calculate, according to the related usage data, priorities of the application programs stored in the terminal;
a sorting module, configured to sort, according to the calculated priorities of the application programs stored in the terminal, the application programs stored in the terminal; and
an icon display module, configured to display, according to a predetermined rule in a preset area on a desktop of the terminal, icons of a preset quantity of application programs ranking top.

In a first implementation manner of the second aspect, the desktop of the terminal includes a dock bar and/or an area of favorite icons, where the area of favorite icons is an area preset for displaying an icon of a particular application program, and the preset area on the desktop is the dock bar or the area of favorite icons.

In the second aspect or a second implementation manner of the second aspect, the related usage data includes at least one of the following data: names, categories, usage duration, times, and/or usage time of the application programs.

Preferably, in any one of the foregoing systems for displaying icons of application programs, the calculation module specifically includes:
the calculating, by a calculation module according to the related usage data, priorities of the application programs in the terminal is specifically:
   calculating a priority of an application program according to a preset single item of data in the related usage data; or
   calculating a priority of an application program according to the preset single item of data and a corresponding weighted value, where the weighted value is a weighted value preset for the single item of data, or a weighted value set for the single item of data according to another item of data.

Preferably, in any one of the foregoing systems for displaying icons of application programs, before the displaying, by a sorting module according to a predetermined rule in a preset area on a desktop of the terminal, a preset quantity of application programs ranking top, the system further includes at least one of the following functions:
receiving, by the terminal, a sorting operation request from a user; or
that a preset period expires; or
starting, by the terminal, an application program; or
exiting an application program.

Preferably, in any one of the foregoing systems for displaying corresponding icons of application programs, the predetermined rule is to perform an arrangement according to the priorities of the application programs in a left-to-right order or a top-to-bottom order.

According to a third aspect, the present invention provides a terminal including the system according to the second aspect and implementation manners of the second aspect.

In the embodiments of the present invention, items of usage data during usage of a terminal by a user is recorded, a favorite application program of the user is obtained through analysis according to the recorded usage data, and the favorite application program obtained through analysis is displayed in a preset area on a desktop of the terminal; in this way, preferences of the user can be accurately and reliably obtained through analysis, the user can use a favorite application program conveniently, and an icon, on the desktop, of the favorite application program can be automatically updated without a need of manual setting by the user.

### BRIEF DESCRIPTION OF DRAWINGS

FIG. 1 is a flowchart of a method for displaying icons of application programs according to Embodiment 1 of the present invention;
FIG. 2 is a block diagram of functional modules of a system for displaying icons of application programs according to Embodiment 2 of the present invention; and
FIG. 3 is a block diagram of functional modules of a terminal according to Embodiment 3 of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

Specific implementation of the present invention is described in detail below with reference to specific embodiments.

### Embodiment 1

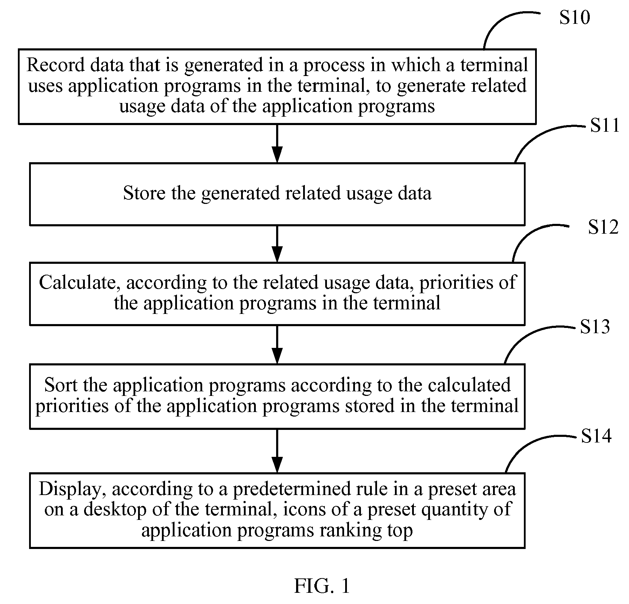

FIG. 1 is a flowchart of a method for displaying icons of application programs according to Embodiment 1 of the present invention. The method includes: Step S10: Record data that is generated in a process in which a terminal uses application programs in the terminal, to generate related usage data of the application programs.

The terminal includes multiple application programs, and each application program may be displayed on a display screen of the terminal in a form of an icon. In this embodiment, the terminal is an intelligent terminal, such as a mobile terminal or a tablet computer. Related usage data about usage of each application program by the terminal includes, but is not limited to, the following items: a name, a category, usage duration, a quantity of usage times, and usage time of the application program that is used in the terminal. The category of the used application program may be customized by a user, or may be category information built in the program. The usage duration of the application program is a sum of all time for which the user uses the application program, where timing starts when the application program is started and ends when the application program exits. The counted time is a single time of usage duration of the application program, and then the single time of usage duration of the application program is added to total usage duration of the application program. Times of using the application program is a recorded total quantity of times that the user uses the application program, that is, after the application program is started, it may be recorded that the application program is used once, and a stored quantity of usage times of the application program is increased by one. The usage time of the application program records time at which the application program is used for the last time.

Step S 11: Store the related usage data. For example, store recorded total usage duration of an application program, or a total quantity of times of using an application program.

Step S12: Calculate, according to the related usage data, priorities of the application programs in the terminal.

Specifically, a priority of each application program is calculated according to a preset single item of data in the related usage data; or a priority of each application program is separately calculated according to a preset single item of data and a corresponding weighted value, where the weighted value is a weighted value preset for the single item of data, or a weighted value set for the single item of data according to another item of data.

For example, a priority is calculated according to a single item of data, that is, the priority is calculated according to usage duration or a quantity of usage times of an application program. The usage duration of the application program is used as an example for description, that is, at intervals or after use of an application program is completed, application programs are sorted according to stored usage duration of the application programs. When a priority is calculated according to a single item of data and a preset weighted value, the preset weighted value is a weighted value preset for each application, or a weighted value set according to another item of data. When priorities are calculated according to a single item of data and preset weighted values, sorting is first performed based on an item of data, and then preset weighted values are multiplied. For example, that is, if sorting is performed based on usage duration of application programs, the sorting is then performed again according to weighted values preset for different categories of the application programs, which is specifically that: the different weighted values are preset for the different categories of the application programs, for example, a weighted value of an application program of a game category is 1, and a weighted value of an application program of a study category is 0.8, a weighted value of an application program in a working category is 0.6, or the like; and further, the usage duration of the application program are multiplied by the weighted values of the corresponding categories of the application programs, and therefore, final priorities can be generated.

Step S13: Sort the application programs according to the calculated priorities of the application programs stored in the terminal.

Before the displaying, according to a predetermined rule in a preset area on a desktop of the terminal, a preset quantity of application programs ranking top, the method further includes at least one of the following steps: receiving, by the terminal, a sorting operation request from a user; or that a preset period expires; or starting, by the terminal, an application program; or exiting, by the terminal, an application program.

Step S14: Display, according to a predetermined rule in a preset area on a desktop of the terminal, icons of a preset quantity of application programs ranking top.

In this implementation manner, the preset area on the desktop of the terminal is a DOCK bar of an intelligent mobile terminal. In another implementation manner, the desktop of the terminal further includes an area of favorite icons, where the area of favorite icons is an area preset for displaying an icon of a particular application program, and the preset area on the desktop is the dock bar or the area of favorite icons.

When a selected icon of an application program is displayed, the selected icon of the application program may be directly displayed on the preset area, or the selected icon of the application program may be used to replace an original icon of an application program. In addition, when selected icons of application programs are displayed, the predetermined rule is to perform an arrangement according to the priorities of the application programs in a left-to-right order or a top-to-bottom order. The foregoing manner of displaying a selected icon of an application program is only an example for description, and in different implementation manners, different display manners may also be used.

In an implementation manner, the application program used by the terminal is an application program that corresponds to websites visited by using a browser, and the related usage data is data of preset websites that are visited by using the browser, and includes times or duration of a preset quantity of websites that are visited by the user.

According to the foregoing method for displaying icons of application programs, preferences of a user can be accurately and reliably obtained through analysis by recording usage data of the user, the user can use a favorite application program conveniently, and a preset area (such as a DOCK bar or a desktop) can be automatically updated without a need of manual setting by the user.

A specific application of the method for displaying icons in a terminal is further described below with reference to two specific embodiments.
1. After an application program is started, a name of the started application program, usage duration of the application program, and times of using the application program are recorded, and the recorded usage data is stored, where these pieces of data may be saved for a long period of time. Priorities are obtained through calculation according to recorded usage parameters of application programs and set weighted values, and four or five applications having the highest priorities (where there are generally four icons on a DOCK bar) are obtained through calculation. Icons on the DOCK bar are updated according to selected application programs, and priorities of the application programs that correspond to the icons displayed from left to right on the DOCK bar are in descending order.
2. After an application program is started, an application program that is last used by a user is recorded, a name and a start time of the application program are recorded, and the recorded name and start time of the application program are saved to a list (where application data last used changes rapidly, and may not need to be recorded for a long period of time). The sorting module 12 lists four or five last used application programs (where there are generally four icons on a DOCK bar) according to a sequential order in which application programs that are recorded in the list are used. Icons on the DOCK bar are updated according to the selected application programs, and priorities of the application programs that correspond to the icons displayed from left to right on the DOCK bar are in descending order. In this way, when the user exits an application program, an icon on the DOCK bar is an icon of the application program that is last opened by the user, and therefore, the user can use the last used application program very conveniently.

When the method for displaying icons of application programs is applied to a DOCK bar of an intelligent electronic terminal, a current situation in which icons on the DOCK bar cannot be dynamically updated can be solved.

### Embodiment 2

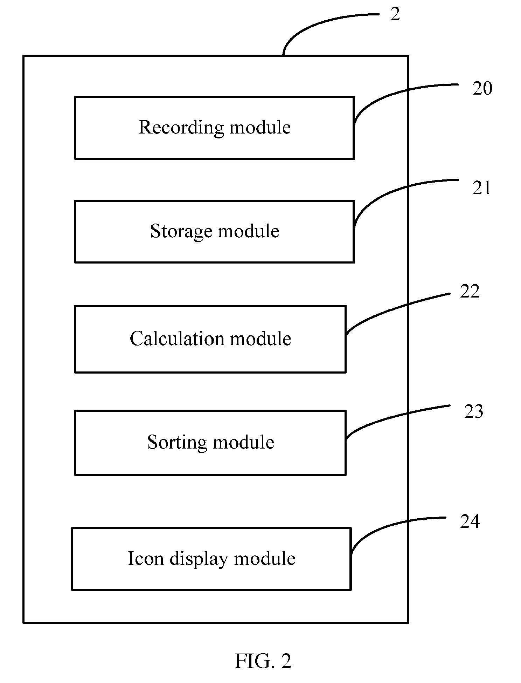

FIG. 2 is a block diagram of functional modules of a system for displaying icons in a terminal in an implementation manner of the present invention. The system 2 for displaying icons in a terminal includes a recording module 20, a storage module 21, a calculation module 22, a sorting module 23, and an icon display module 24.

The recording module 20 is configured to record data that is generated in a process in which a terminal uses application programs in the terminal, to generate related usage data of the application programs.

The related usage data includes at least one of the following data: names, categories, usage duration, quantities of usage times, and/or usage time of the application programs.

The storage module 21 is configured to store the related usage data.

The calculation module 22 is configured to calculate, according to the related usage data, priorities of the application programs in the terminal, which is specifically: calculating a priority of each application program according to a single item of data in the related usage data; or calculating a priority of each application program according to the preset single item of data and a corresponding weighted value, where the weighted value is a weighted value preset for the single item of data, or a weighted value set for the single item of data according to another item of data.

The sorting module 23 sorts, according to the calculated priorities of the application programs, the application programs stored in the terminal, where before a preset quantity of application programs ranking top are displayed according to a predetermined rule in a preset area on a desktop of the terminal, the sorting module 23 performs at least one of the following functions: receiving, by the terminal, a sorting operation request from a user; or that a preset period expires; or starting, by the terminal, an application program; or exiting, by the terminal, an application program.

The icon display module 23 displays, according to the predetermined rule in the preset area on the desktop of the terminal, the icons of the preset quantity of application programs ranking top.

The desktop of the terminal includes a dock bar and/or an area of favorite icons, where the area of favorite icons is an area preset for displaying a particular application program, and the preset area on the desktop is the dock bar or the area of favorite icons.

When selected icons of application programs are displayed, the predetermined rule is to perform an arrangement according to the priorities of the application programs in a left-to-right order or a top-to-bottom order.

### Embodiment 3

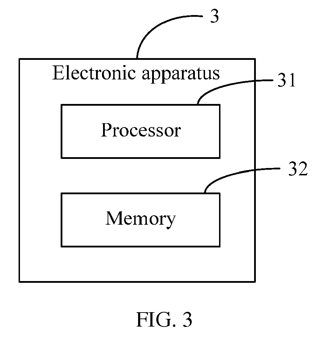

Refer to FIG. 3, which is a block diagram of functional modules of a terminal 3 according to Embodiment 3 of the present invention. The terminal 3 includes: a processor 31 and a memory 32.

The processor 31 is configured to execute a program.

In Embodiment 3 of the present invention, the program may include program code, where the program code includes a computer operation instruction.

The processor 31 may be a central processing unit CPU, or one or more integrated circuits configured to implement this embodiment of the present application.

The memory 32 is configured to store multiple application programs and one control program, where the control program is used for controlling display of icons of the multiple application programs.

The memory 32 may include a random access memory, or may further include a non-volatile memory.

The processor 31 is configured to execute the control program stored in the memory 32, to perform the following method:
recording data that is generated in a process in which a terminal uses application programs in the terminal, to generate related usage data of the application programs, where
the related usage data includes at least one of the following data: names, categories, usage duration, quantities of usage times, and/or usage time of the application programs;
storing the generated related usage data;
calculating, according to the related usage data, priorities of the application programs in the terminal, where
specifically, a priority of each application program is separately calculated according to a single item of data in related usage data about usage of each application program by the terminal; or a priority of each application program is separately calculated according to a single item of data and a preset weighted value that corresponds to the single item of data, where the weighted value is a weighted value preset for each piece of data, or a weighted value set according to another item of data;
sorting the application programs according to the calculated priorities of the application programs, where
before the displaying, according to a predetermined rule in a preset area on a desktop of the terminal, a preset quantity of application programs ranking top, the method further includes at least one of the following steps: receiving, by the terminal, a sorting operation request from a user; or that a preset period expires; or starting, by the terminal, an application program; or exiting, by the terminal, an application program; and
displaying, according to a predetermined rule in a preset area on a desktop of the terminal, icons of a preset quantity of application programs ranking top, where
the desktop of the terminal includes a dock bar and/or an area of favorite icons, where the area of favorite icons is an area preset for displaying an icon of a particular application program, and the preset area on the desktop is the dock bar or the area of favorite icons; and
when selected icons of application programs are displayed, the predetermined rule is to perform an arrangement according to the priorities of the application programs in a left-to-right order or a top-to-bottom order.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A method for displaying icons of application programs, wherein the method comprises:
recording data that is generated in a process in which a terminal uses application programs stored in the terminal, to generate related usage data of the application programs;
storing the related usage data;
calculating, according to the related usage data, priorities of the application programs stored in the terminal;
sorting, according to the calculated priorities of the application programs stored in the terminal, the application programs stored in the terminal; and
displaying, according to a predetermined rule in a preset area on a desktop of the terminal, icons of a preset quantity of application programs ranking top.

2. The method according to claim 1, wherein the desktop of the terminal comprises a dock bar and/or an area of favorite icons, wherein the area of favorite icons is an area preset for displaying an icon of a particular application program, and the preset area on the desktop is the dock bar or the area of favorite icons.

3. The method according to claim 1 or 2, wherein the related usage data comprises at least one of the following data: names, categories, usage duration, quantities of usage times, and usage time of the application programs.

4. The method according to any one of claims 1 to 3, wherein the calculating, according to the related usage data, priorities of the application programs in the terminal is specifically:
calculating a priority of each application program according to a preset single item of data in the related usage data; or
calculating a priority of each application program according to the preset single item of data and a corresponding weighted value, wherein the weighted value is a weighted value preset for the single item of data, or a weighted value set for the single item of data according to another item of data.

5. The method according to any one of claims 1 to 4, wherein before the displaying, according to a predetermined rule in a preset area on a desktop of the terminal, a preset quantity of application programs ranking top, the method further comprises at least one of the following steps:
receiving, by the terminal, a sorting operation request from a user; or
that a preset period expires; or
starting, by the terminal, an application program; or
exiting, by the terminal, an application program.

6. The method according to any one of claims 1 to 5, wherein the predetermined rule is to perform an arrangement according to the priorities of the application programs in a left-to-right order or a top-to-bottom order.

7. A system for displaying icons of application programs, wherein the system comprises:
a recording module, configured to record data that is generated in a process in which a terminal uses application programs stored in the terminal, to generate related usage data of the application programs;
a storage module, configured to store the related usage data;
a calculation module, configured to calculate, according to the related usage data, priorities of the application programs stored in the terminal;
a sorting module, configured to sort, according to the calculated priorities of the application programs stored in the terminal, the application programs stored in the terminal; and
an icon display module, configured to display, according to a predetermined rule in a preset area on a desktop of the terminal, icons of a preset quantity of application programs ranking top.

8. The system according to claim 7, wherein the desktop of the terminal comprises a dock bar and/or an area of favorite icons, wherein the area of favorite icons is an area preset for displaying an icon of a particular application program, and the preset area on the desktop is the dock bar or the area of favorite icons.

9. The system according to claim 7 or 8, wherein the related usage data comprises at least one of the following data: names, categories, usage duration, quantities of usage times, and usage time of the application programs.

10. The system according to any one of claims 7 to 9, wherein the calculating, by a calculation module according to the related usage data, priorities of the application programs in the terminal is specifically:
calculating a priority of an application program according to a preset single item of data in the related usage data; or
calculating a priority of an application program according to the preset single item of data and a corresponding weighted value, wherein the weighted value is a weighted value preset for the single item of data, or a weighted value set for the single item of data according to another item of data.

11. The system according to any one of claims 7 to 10, before the displaying, by a sorting module according to a predetermined rule in a preset area on a desktop of the terminal, a preset quantity of application programs ranking top, further comprising at least one of the following functions:
receiving, by the terminal, a sorting operation request from a user; or
that a preset period expires; or
starting, by the terminal, an application program; or
exiting an application program.

12. The method according to any one of claims 7 to 11, wherein the predetermined rule is to perform an arrangement according to the priorities of the application programs in a left-to-right order or a top-to-bottom order.

13. A terminal comprising the system according to any one of claims 7 to 12.
